# EUROPÄISCHE PATENTSCHRIFT

(11) **EP 3 472 001 B1**
(45) Veröffentlichungstag und Bekanntmachung des Hinweises auf die Patenterteilung: **02.12.2020**
(21) Anmeldenummer: 17730413.6
(22) Anmeldetag: 31.05.2017
(51) Int. Cl.: B60R 22/40, B60R 22/41

(54) **GURTAUFROLLER**
BELT RETRACTOR
RÉTRACTEUR DE CEINTURE

(30) Priorität: 20.06.2016 DE 102016007431
(43) Veröffentlichungstag der Anmeldung: 24.04.2019
(73) Patentinhaber: ZF Automotive Germany GmbH, 73553 Alfdorf (DE)
(72) Erfinder: MICHEL, Frederic, 73527 Schwäbisch Gmünd (DE); PATYK, Pawel, 42-200 Czestochowa (PL)
(74) Vertreter: ZF Patentabteilung - DIPS
(86) Internationale Anmeldenummer: PCT/EP2017/063082
(87) Internationale Veröffentlichungsnummer: WO 2017/220297

(56) Entgegenhaltungen:
- WO-A1-2016/169637
- WO-A2-2011/009608
- US-A1- 2005 133 652
- US-B2- 7 090 304

## Beschreibung

Die Erfindung betrifft einen Gurtaufroller für einen Fahrzeug-Sicherheitsgurt, mit einer drehbar in einem Rahmen gelagerten Gurtspule, einem Sensor zur fahrzeugsensitiven Blockierung der Gurtspule und einem Mechanismus zur Deaktivierung des Sensors.

Gurtaufroller für Fahrzeug-Sicherheitsgurte sind im Stand der Technik allgemein bekannt. Der Fahrzeug-Sicherheitsgurt wird dabei wahlweise auf eine Gurtspule auf- oder von dieser abgewickelt.

Aus Sicherheitsgründen muss in bestimmten Situationen ein Abwickeln des Fahrzeug-Sicherheitsgurts verhindert werden. Insbesondere ist dies der Fall, wenn ein Fahrzeug in einen Unfall verwickelt oder anderweitig stark verzögert wird. Der Fahrzeug-Sicherheitsgurt muss in einem solchen Fall denjenigen FahrzeugInsassen, der mit dem Fahrzeug-Sicherheitsgurt angeschnallt ist, wirksam auf seinem Sitzplatz halten.

Bekannte Gurtaufroller umfassen dafür, wie eingangs schon erwähnt, einen Sensor. In der Regel umfasst dieser eine Trägheitsmasse, die üblicherweise als Metallkugel ausgeführt ist. Im Falle von starken Beschleunigungen oder starken Verzögerungen lenkt diese Metallkugel einen Sensorhebel aus und blockiert so die Gurtspule.

Diese Blockierung der Gurtspule ist jedoch nicht in allen Situationen, in denen starke Beschleunigungen oder starke Verzögerungen auftreten, erwünscht, weshalb Mechanismen zur Deaktivierung dieses Sensors im Stand der Technik bekannt sind. Ein solcher Mechanismus sorgt dafür, dass der fahrzeugsensitive Sensor selektiv deaktiviert werden kann und damit die Gurtspule nicht blockiert wird.

Darüber hinaus verursacht die Trägheitsmasse des Sensors in der Regel Geräusche, wenn sie sich bewegt. Solche Geräusche können von den Fahrzeuginsassen als störend empfunden werden. Insbesondere trifft dies zu, wenn der Gurtaufroller für eine Rücksitzanwendung gestaltet ist und in der Hutablage eingebaut wird. Dann sitzt der Gurtaufroller in der direkten Umgebung des Kopfes von Insassen, die auf dem Rücksitz Platz nehmen. Dadurch sind die durch den Sensor verursachten Geräusche deutlich wahrnehmbar. Um diese Geräuschentwicklung zu behindern, werden ebenfalls Mechanismen zur Deaktivierung des Sensors verwendet.

Ein Gurtaufroller der eingangs genannten Art ist aus der DE 10 2006 037 544 A1 bekannt. Bei diesem Gurtaufroller ist ein Schlepphebel über eine Reibkupplung mit der Gurtspule verbunden. Der Schlepphebel kann somit von einer Drehbewegung der Gurtspule über einen Reibschluss mitgenommen werden. Der Schlepphebel wirkt auf ein Verstellelement, mit dem ein Sensorhebel eines Sensors zur Detektion eines Fahrzeugzustands blockierbar ist. Der Sensorhebel wird insbesondere blockiert, wenn der Sicherheitsgurt nicht von einem Fahrzeug-Insassen angelegt ist und wenn der Sicherheitsgurt gerade auf die Gurtspule aufgewickelt wird. Der Sensorhebel wird also nur freigegeben, wenn die Gurtspule in einer Abwicklungsrichtung gedreht wird.

Ein Gurtaufroller nach dem Oberbegriff von Anspruch 1, mit einem fahrzeugsensitiven Sensor, der deaktiviert werden kann, ist aus der US 7,090,304 B2 bekannt. Bei diesem Gurtaufroller ist ein Hebelarm, der den fahrzeugsensitiven Sensor blockieren kann, über eine Steuerscheibe und ein Getriebe mit der Gurtspule wirkverbunden.

Die Aufgabe der vorliegenden Erfindung ist, einen Gurtaufroller der eingangs genannten Art weiter zu verbessern. Dabei soll der Gurtaufroller wenig störende Geräusche verursachen. Darüber hinaus soll der Gurtaufroller einfach aufgebaut und zuverlässig in seiner Funktion sein.

Die Aufgabe wird durch einen Gurtaufroller der eingangs genannten Art gelöst, bei dem die Gurtspule über ein drehbar am Rahmen gelagertes Zahnrad, ein Reibungselement und einen Schlepphebel auf den Mechanismus zur Deaktivierung des Sensors wirkt und diesen verstellen kann. Am Rahmen gelagert bedeutet dabei, dass die Drehachse des Zahnrades relativ zum Rahmen feststeht. Durch das Zahnrad wird eine Über- oder Untersetzung zwischen der Bewegung der Gurtspule und des Schlepphebels geschaffen. Dadurch können die auf den Schlepphebel und damit auf den Mechanismus zur Deaktivierung des Sensors wirkenden Kräfte genau eingestellt werden. Gleichzeitig können so die Translations- und/oder Rotationswege dieser Elemente eingestellt werden. Der Mechanismus zur Deaktivierung des Sensors wird somit sehr präzise betätigt. Dadurch ist er in seiner Funktion zuverlässig. Außerdem werden so die Komponenten des Mechanismus zur Deaktivierung des Sensors stets mit einer definierten Kraft in einer definierten Position gehalten. Dadurch werden ungewünschte Bewegungen der Komponenten vermieden, wodurch störende Geräusche zumindest reduziert werden. Somit wird ein Fahrzeug-Insasse nicht durch solche Geräusche gestört.

Bevorzugt wirkt das Zahnrad über eine Außenverzahnung mit einem drehfest auf der Gurtspule gelagerten Ritzel zusammen. Durch die Zahnradpaarung ist eine einfache, zuverlässige und verschleißarme funktionale Kopplung des Zahnrads mit der Gurtspule gewährleistet. Darüber hinaus kann über die Zähnezahlen des Zahnrades und/oder des Ritzels eine Unter- oder Übersetzung realisiert werden. Darüber hinaus verringert die Zahnradpaarung störende Geräusche, da sie keine losen Elemente beinhaltet.

Gemäß einer Ausführungsform umfasst der Mechanismus zur Deaktivierung des Sensors einen drehbar gelagerter Blockierhebel, der verstellbar ist zwischen einer Deaktivierungsstellung, in der er an einer Haltefläche des Sensors angreift, und einer Freigabestellung, in der er von der Haltefläche beabstandet ist. Somit ist eine einfache und zuverlässige Möglichkeit zur Deaktivierung des Sensors gegeben. Durch das Angreifen an der Haltefläche des Sensors wird zumindest eine Reduktion der durch den Sensor verursachten Geräusche bewirkt.

In einer Gestaltungsvariante weist der Schlepphebel eine erste und eine zweite Anlagefläche auf, die mit dem Blockierhebel zusammenwirken, um ihn zwischen der Deaktivierungsstellung und der Freigabestellung zu verstellen, wobei die Anlageflächen vorzugsweise benachbart angeordnet sind. Der Blockierhebel befindet sich damit stets in einer definierten Position am Schlepphebel und damit insgesamt in einer definierten Position. Dadurch ist die Deaktivierung zuverlässig realisiert. Darüber hinaus vermindert die definierte Positionierung Geräusche oder lässt diese gar nicht erst entstehen.

Zusätzlich kann der Schlepphebel zwei in Umfangsrichtung versetzte Anschlagflächen zur Begrenzung einer Rotationsbewegung des Schlepphebels relativ zum Blockierhebel umfassen. Der Schlepphebel und der Blockierhebel befinden sich somit auch bezüglich einer Rotation in einer definierten Lage zueinander.

Vorzugsweise ist der Blockierhebel in eine Richtung zur Deaktivierung des Sensors vorzugsweise durch eine Feder vorgespannt. Somit werden störende Geräusche des Gurtaufrollers und des Mechanismus zur Deaktivierung des Sensors wirkungsvoll unterbunden.

In einer Ausführungsform ist eine Drehbewegung der Gurtspule mittels einer Reibkupplung mit einer Drehbewegung des Schlepphebels gekoppelt, wobei die Reibkupplung eine Feder enthält, die mindestens ein Reibungselement so vorspannt, dass ein vorgegebenes Reibmoment zwischen einem Eingang und einem Ausgang der Reibkupplung erzeugt wird, wobei die Feder vorzugsweise eine Spiralfeder aus Metall ist. Federn, insbesondere Spiralfedern aus Metall, sind in der Regel so ausgelegt, dass sie weder Ermüdungs- noch Setzungserscheinungen zeigen. Aus diesen Gründen wird das vorgegebene Reibmoment über die gesamte Lebensdauer des Gurtaufrollers konstant gehalten. Daraus folgt eine stets zuverlässige Funktion des Gurtaufrollers und des Mechanismus zur Deaktivierung des Sensors zur fahrzeugsensitiven Blockierung der Gurtspule. Weiterhin werden vom Sensor oder vom Mechanismus zur Deaktivierung des Sensors ausgehende Geräusche vermieden oder zumindest vermindert, sodass ein Fahrzeug-Insasse nicht durch solche Geräusche gestört wird.

Das Reibungselement kann einstückig mit dem Schlepphebel ausgeführt sein. Das Reibungselement und der Schlepphebel können beispielsweise im Kunststoffspitzgussverfahren hergestellt werden. Somit ist eine kostengünstige Herstellung möglich.

Vorzugsweise ist die Feder zwischen zwei Reibungselementen angeordnet und die Reibungselemente sind in entgegengesetzte Richtungen vorspannt. Die Kraftbeaufschlagung ist also im Wesentlichen symmetrisch. Dadurch kann sich ein im Wesentlichen identisches Verhalten der Reibkupplung in beide Drehrichtungen ergeben. Ebenso werden die Bestandteile der Reibkupplung symmetrisch oder zumindest gleichförmig belastet, sodass Verschleiß vermieden und eine hohe Lebensdauer erreicht wird.

In einer bevorzugten Variante wirkt das Reibungselement mit einer am Zahnrad angeordneten Reibfläche zusammen. Das Zahnrad und das Reibungselement sind so auf einfache und zuverlässige Art gekoppelt. Darüber hinaus ergibt sich so ein kompakter Aufbau.

Zusätzlich kann das Zahnrad ringförmig und die Reibfläche an dessen Innenumfang angeordnet sein. Es wird folglich durch den Mechanismus zur Deaktivierung des Sensors nur ein geringer Bauraum beansprucht. Vorteilhafterweise ist die Reibfläche ringförmig. Somit wird das Reibmoment unabhängig von der Winkelstellung oder Drehposition der Reibfläche der Reibkupplung konstant gehalten. Zudem kann so in beide Drehrichtungen ein gleiches Reibverhalten gewährleistet werden. Dadurch ist eine hohe Zuverlässigkeit des Gurtaufrollers und des Mechanismus zur Deaktivierung des Sensors gegeben.

Bevorzugt ist die Reibfläche durch mindestens eine Wand einer umlaufenden Nut gebildet und hat die Nut vorzugsweise einen V-förmigen Querschnitt. Eine Nut ist dabei eine einfache und kostengünstige Art, die Reibfläche zu realisieren. Über den Winkel, in dem bei einer V-förmigen Nut die Wände zueinander ausgerichtet sind, kann das Reibverhalten der Reibkupplung zusätzlich beeinflusst werden.

In einer Variante ist das mindestens eine Reibungselement zumindest teilweise in der Nut aufgenommen und sind die in der Nut aufgenommenen Abschnitte des Reibungselements zum Querschnitt der Nut korrespondierend gestaltet. Dadurch ist das Reibungselement auch bei Erschütterungen und Vibrationen, die im Fahrzeug auftreten können, sicher gelagert und kann seine Funktion störungsfrei ausführen. Es wird also stets ein vorgegebenes Reibmoment erzeugt. Darüber hinaus ergibt sich ein großflächiger Kontakt zwischen dem Reibungselement und den Wänden der Nut. Es kann also ein sehr hohes Reibmoment erzeugt werden, wofür jedoch nur ein verhältnismäßig kleiner Bauraum benötigt wird.

Das Reibungselement kann als elastischer, kreisbogenförmiger Reibarm ausgebildet sein. Ein solcher Reibarm ist an die am Innenumfang des drehbaren Zahnrads angeordnete Reibfläche angepasst. Der Reibarm kann beispielsweise mithilfe eines Spritzgussverfahrens aus Kunststoff hergestellt sein. Er kann somit kostengünstig hergestellt werden und ist dennoch zuverlässig.

Die Erfindung wird nachstehend anhand der beigefügten Zeichnungen erläutert. Es zeigen:
- Figur 1 einen erfindungsgemäßen Gurtaufroller in einer perspektivischen Ansicht,
- Figur 2a eine Seitenansicht des erfindungsgemäßen Gurtaufrollers aus Fig. 1, bei dem der Sensor deaktiviert ist und bei der aus Gründen der Übersichtlichkeit einige Teile weggelassen sind,
- Figur 2b einen Ausschnitt aus Figur 2a, wobei der besseren Übersichtlichkeit halber verschiedene Bauteile weggelassen sind,
- Figur 3a eine Seitenansicht des erfindungsgemäßen Gurtaufrollers aus Fig. 1, bei dem der Sensor nicht deaktiviert ist und bei der aus Gründen der Übersichtlichkeit einige Teile weggelassen sind,
- Figur 3b einen Ausschnitt aus Figur 3a, wobei der besseren Übersichtlichkeit halber verschiedene Bauteile weggelassen sind,
- Figur 4 eine Reibkupplung und einen Schlepphebel des erfindungsgemäßen Gurtaufrollers aus Figur 1,
- Figur 5 eine Explosionsdarstellung des Schlepphebels und der Reibkupplung aus Figur 4,
- Figur 6 eine Ansicht des Schlepphebels und der Reibkupplung des erfindungsgemäßen Gurtaufrollers aus einer hinsichtlich der Figur 4 entgegengesetzten Perspektive,
- Figur 7 einen Schnitt entlang der Linie A - A aus Figur 6, und
- Figur 8 einen Schnitt entlang der Linie B - B aus Figur 6.

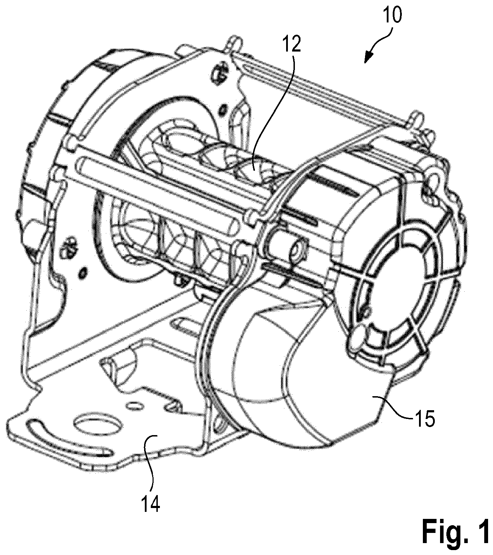

Die Figur 1 zeigt einen Gurtaufroller 10 mit einer Gurtspule 12, die drehbar an einem Rahmen 14 gelagert ist. Zusätzlich ist am Rahmen 14 ein Gehäusedeckel 15 angebracht. Ein Fahrzeug-Sicherheitsgurt ist aus Gründen der Übersichtlichkeit nicht dargestellt.

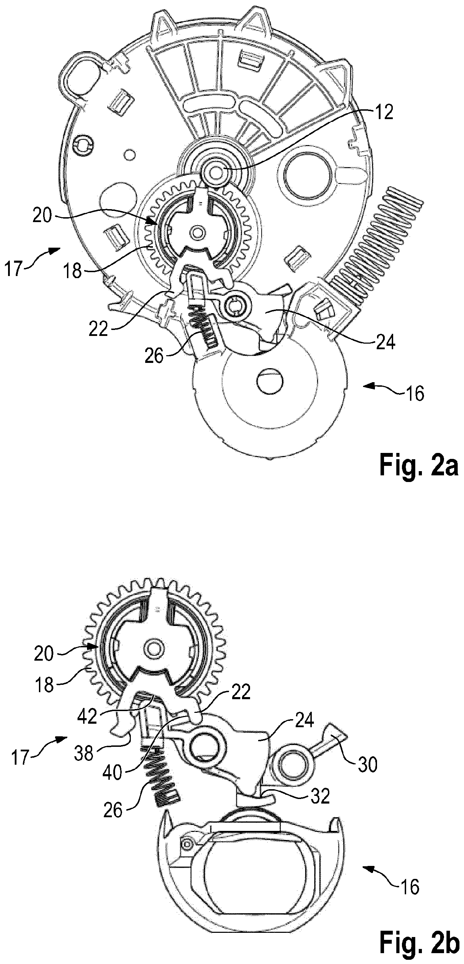

Die Figur 2a zeigt den Gurtaufroller 10 in einer Seitenansicht, in der der Gehäusedeckel 15 abgenommen ist. Hier sind ein Sensor 16 zur fahrzeugsensitiven Blockierung der Gurtspule sowie ein Mechanismus 17 zur Deaktivierung des Sensors 16 zu erkennen.

Auf der Gurtspule 12 ist ein nicht dargestelltes Ritzel drehfest angeordnet. Dieses wirkt mit einem Zahnrad 18 zusammen. Mit dem Zahnrad 18 ist über eine Reibkupplung 20 und somit über das in der Reibkupplung 20 vorherrschende Reibmoment ein Schlepphebel 22 drehverbunden.

Der Schlepphebel 22 ist mit einem drehbar gelagerten Blockierhebel 24 gekoppelt, der über eine Feder 26 in Richtung des Schlepphebels 22 vorgespannt ist. Der Blockierhebel 24 stellt ein Deaktivierungselement für den Sensor 16 dar und ist ein Bestandteil des Mechanismus 17 zur Deaktivierung des Sensors 16.

Die Gurtspule 12 wirkt also über das Zahnrad 18 und den Schlepphebel 22 auf den Mechanismus 17 zur Deaktivierung des Sensors 16 und kann diesen verstellen.

Figur 2b zeigt die Wirkungskette vom Zahnrad 18 über die Reibkupplung 20 und den Schlepphebel 22 bis zum Blockierhebel 24 im Detail. Darüber hinaus ist in der Figur 2b der fahrzeugsensitive Sensor 16 zu sehen. Dieser kann einen drehbar gelagerten Sensorhebel 30 verschwenken und somit eine Blockierung der Gurtspule 12 bewirken.

In den Figuren 2a und 2b ist der Blockierhebel 24 in einer Deaktivierungsstellung gezeigt. In dieser Stellung liegt der Blockierhebel 24 an einer Haltefläche 32 des Sensorhebels 30 an. In der Folge kann der Sensorhebel 30 nicht in eine Stellung verschwenkt werden, in der er die Gurtspule 12 blockiert.

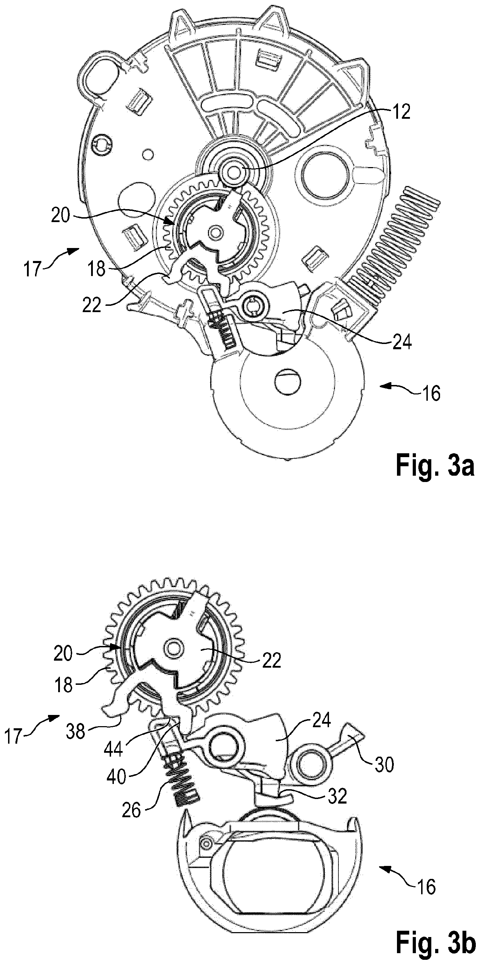

In der Figur 3a ist der gleiche Ausschnitt wie in der Figur 2a zu sehen. Allerdings befindet sich der Blockierhebel 24 in einer Freigabestellung. In dieser Stellung ist der Blockierhebel 24 von der Haltefläche 32 des Sensorhebels 30 abgehoben oder beabstandet.

Folglich ist in dieser Position der Sensorhebel 30 derart freigegeben, dass bei einer Auslösung des Sensors 16 der Sensorhebel 30 verschwenkt und die Bewegung der Gurtspule 12 blockiert werden kann.

In der Figur 3b ist wieder die Wirkungskette vom Zahnrad 18 bis zum Sensorhebel 30 isoliert dargestellt.

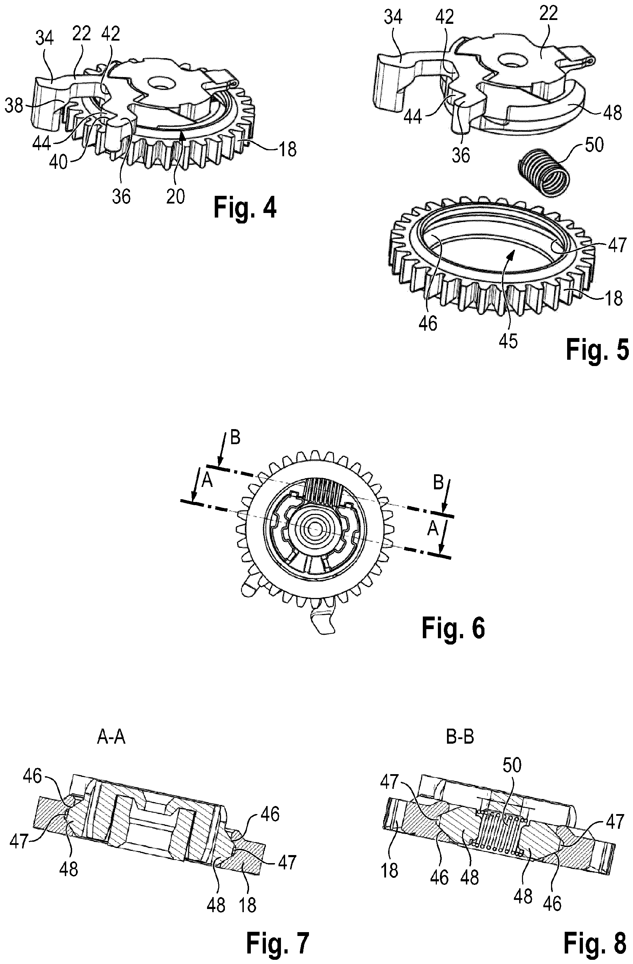

Die Figuren 4 und 5 zeigen den Schlepphebel 22 und das Zahnrad 18 im Detail. Am Schlepphebel sind zwei Arme 34, 36 angeordnet, zwischen denen sich im montierten Zustand ein schlepphebelseitiger Arm des Blockierhebels 24 befindet (vgl. Figuren 2b und 3b).

In Umfangsrichtung gesehen bildet der Arm 34 eine erste Anschlagfläche 38 für den Blockierhebel 24 aus und der Arm 36 eine zweite Anschlagfläche 40 für den Blockierhebel 24.

In der in den Figuren 2a und 2b dargestellten Deaktivierungsstellung des Blockierhebels 24 liegt der schlepphebelseitige Arm des Blockierhebels 24 an der Anschlagfläche 38 an.

In der in den Figuren 3a und 3b dargestellten Freigabestellung des Blockierhebels 24 liegt der schlepphebelseitige Arm des Blockierhebels 24 an der Anschlagfläche 40 an.

In radialer Richtung bildet der Schlepphebel 22 eine erste Anlagefläche 42 und eine zweite Anlagefläche 44. Dabei liegt der schlepphebelseitige Arm des Blockierhebels 24 in der Deaktivierungsstellung gemäß Figuren 2a und 2b an der ersten Anlagefläche 42 an.

In der in den Figuren 3a und 3b gezeigten Freigabestellung liegt der schlepphebelseitige Arm des Blockierhebels 24 an der zweiten Anlagefläche 44 an.

Aufgrund der Federbelastung des Blockierhebels 24 durch die Feder 26 liegt der schlepphebelseitige Arm des Blockierhebels 24 stets an einer der beiden Anlageflächen 42, 44 an.

In der Figur 5 sind der Schlepphebel 22 und das Zahnrad 18 in einer Explosionsdarstellung gezeigt. An einem Innenumfang 45 des Zahnrades 18 ist eine ringförmige Reibfläche 46 realisiert. Diese ist durch die Wände einer umlaufenden Nut 47 gebildet.

Am Schlepphebel 22 sind zwei mit der Geometrie der Reibfläche korrespondierende Reibungselemente 48 angeordnet. Ein Querschnitt der Reibungselemente 48 entspricht also im Wesentlichen einem Querschnitt der Nut 47.

In der dargestellten Ausführungsform sind die Reibungselemente 48 einstückig mit dem Schlepphebel 22 ausgeführt.

Die Reibungselemente 48 werden durch eine Spiralfeder 50 in entgegengesetzte Richtungen vorgespannt. Im montierten Zustand spannt die Spiralfeder 50 also die beiden Reibungselemente 48 in Richtung des Nutgrundes vor. Dadurch werden die Reibungselemente 48 auch gegen die Wände der Nut 47 gedrückt, sodass dort ein Reibschluss entsteht.

In den Figuren 7 und 8, die Schnittansichten aus der Fig. 6 sind, ist zu sehen, dass die Nut 47 einen V-förmigen Querschnitt hat. Die Reibungselemente 48 sind im Schnitt ebenfalls V-förmig gestaltet, sodass sie zum Querschnitt der Nut 47 korrespondieren. Die Reibungselemente 48 sind als elastische kreisbogenförmige Reibarme ausgeführt, sodass diese durch die Spiralfeder 50 elastisch verformt und in die Nut 47 hineingedrückt werden können.

Ausgehend von einer Freigabestellung des Blockierhebels 24, die in den Figuren 3a und 3b dargestellt ist, ist die Funktion des Gurtaufrollers und des Mechanismus 17 zur Deaktivierung des Sensors wie folgt.

In der in den Figuren 3a und 3b dargestellten Freigabestellung des Blockierhebels 24 kann der Sensorhebel 30 durch den Sensor 16 bewegt werden. Der Sensor 16 ist also nicht blockiert und kann somit fahrzeugsensitiv die Gurtspule 12 blockieren.

Durch ein Verdrehen der Gurtspule 12 kann nun der Blockierhebel 24 in eine Deaktivierungsstellung überführt werden. Die Gurtspule 12 wirkt dabei über das drehbar am Rahmen 14 gelagerte Zahnrad 18 und den Schlepphebel 22 auf den Blockierhebel 24, der ein Bestandteil des Mechanismus 17 zur Deaktivierung des Sensors 16 ist.

Der Mechanismus 17 zur Deaktivierung des Sensors 16 kann über diese Wirkungskette verstellt werden.

Dafür wird die Gurtspule 12 in den Figuren 3a und 3b im Uhrzeigersinn verdreht. Eine solche Verdrehung entspricht z. B. dem Aufrollen des Fahrzeug-Sicherheitsgurts. Während des Aufrollens ist zur Minimierung von Geräuschen eine Deaktivierung des Sensors 16 erwünscht.

Das drehfest auf der Gurtspule angeordnete Ritzel bildet dabei mit dem Zahnrad 18 eine Zahnradpaarung, sodass sich das Zahnrad 18 im Gegenuhrzeigersinn verdreht.

Da der Schlepphebel 22 über die Reibkupplung mit dem Zahnrad 18 gekoppelt ist, wird der Schlepphebel 22 ebenfalls im Gegenuhrzeigersinn verdreht. Dabei gleitet der schlepphebelseitige Arm des Blockierhebels 24 von der Anlagefläche 44 in Richtung der Anlagefläche 42 und kommt aufgrund seiner Belastung durch die Feder 26 in Anlage mit der Anlagefläche 42.

In der Folge kommt der entgegengesetzte Arm des Blockierhebels 24 mit der Haltefläche 32 des Sensorhebels 30 in Kontakt und blockiert so eine Auslenkung des Sensorhebels 30. Damit ist der Sensor 16 deaktiviert.

Werden die Gurtspule 12 und damit das Zahnrad 18 weiter verdreht, so wird der Schlepphebel 22 so lange über die Reibkupplung 20 verschwenkt, bis der schlepphebelseitige Arm des Blockierhebels 24 an der Anschlagfläche 38 des Schlepphebels 22 anschlägt. Dann kann sich der Schlepphebel 22 aufgrund der Blockierung durch den Blockierhebel 24 nicht mehr weiter im Gegenuhrzeigersinn drehen.

Die Gurtspule 12 und das Zahnrad 18 können jedoch unter der Voraussetzung, dass das diese Drehbewegung bewirkende Drehmoment größer als das durch die Reibkupplung 20 übertragbare Drehmoment ist, weiter verdreht werden. Die Reibkupplung 20 rutscht dann durch, d. h. sie öffnet sich.

Wird ausgehend von dieser Stellung, in der sich der Blockierhebel 24 in einer Deaktivierungsstellung befindet und die in den Figuren 2a und 2b dargestellt ist, die Gurtspule 12 im Gegenuhrzeigersinn verdreht, so wird der Schlepphebel 22 über die Zahnradpaarung des Ritzels und des Zahnrads 18 sowie über die Reibkupplung 20 im Uhrzeigersinn verdreht.

Dabei gleitet der schlepphebelseitige Arm des Blockierhebels 24 von der Anlagefläche 42 in Richtung der Anlagefläche 44 und kommt mit dieser in Kontakt. Gleichzeitig wird der Blockierhebel 24 im Gegenuhrzeigersinn verschwenkt, sodass er sich von der Haltefläche 32 des Sensorhebels 30 abhebt.

Damit ist die Deaktivierung des Sensors 16 aufgehoben.

Wird die Gurtspule 12 und damit das Ritzel und das Zahnrad 18 weiter verdreht, so wird der Schlepphebel 22 so lange bei dieser Drehbewegung mitgenommen, bis der schlepphebelseitige Arm des Blockierhebels 24 an der Anschlagfläche 40 anliegt.

Danach beginnt die Reibkupplung 20 analog zur obigen Beschreibung durchzurutschen, wenn die entsprechenden Drehmomentverhältnisse vorliegen.

## Patentansprüche

1. Gurtaufroller (10) für einen Fahrzeug-Sicherheitsgurt, mit einer drehbar in einem Rahmen (14) gelagerten Gurtspule (12), einem Sensor (16) zur fahrzeugsensitiven Blockierung der Gurtspule (12) und einem Mechanismus (17) zur Deaktivierung des Sensors (16), **dadurch gekennzeichnet, dass** die Gurtspule (12) über ein drehbar am Rahmen (14) gelagertes Zahnrad (18), ein Reibungselement (20, 46, 48) und einen Schlepphebel (22) auf den Mechanismus (17) zur Deaktivierung des Sensors (16) wirkt und diesen verstellen kann.

2. Gurtaufroller (10) nach Anspruch 1, **dadurch gekennzeichnet, dass** das Zahnrad (18) über eine Außenverzahnung mit einem drehfest auf der Gurtspule (12) gelagerten Ritzel zusammenwirkt.

3. Gurtaufroller (10) nach Anspruch 1 oder 2, **dadurch gekennzeichnet, dass** der Mechanismus (17) zur Deaktivierung des Sensors (16) einen drehbar gelagerter Blockierhebel (24) umfasst, der verstellbar ist zwischen einer Deaktivierungsstellung, in der er an einer Haltefläche (32) des Sensors (16) angreift, und einer Freigabestellung, in der er von der Haltefläche (32) beabstandet ist.

4. Gurtaufroller (10) nach Anspruch 3, **dadurch gekennzeichnet, dass** der Schlepphebel (22) eine erste und eine zweite Anlagefläche (42, 44) aufweist, die mit dem Blockierhebel (24) zusammenwirken, um ihn zwischen der Deaktivierungsstellung und der Freigabestellung zu verstellen, wobei die Anlageflächen (42, 44) vorzugsweise benachbart angeordnet sind.

5. Gurtaufroller (10) nach Anspruch 3 oder 4, **dadurch gekennzeichnet, dass** der Schlepphebel (22) zwei in Umfangsrichtung versetzte Anschlagflächen (38, 40) zur Begrenzung einer Rotationsbewegung des Schlepphebels (22) relativ zum Blockierhebel (24) umfasst.

6. Gurtaufroller (10) nach einem der Ansprüche 3 bis 5, **dadurch gekennzeichnet, dass** der Blockierhebel (24) in eine Richtung zur Deaktivierung des Sensors (16) vorzugsweise durch eine Feder (26) vorgespannt ist.

7. Gurtaufroller (10) nach einem der vorhergehenden Ansprüche, **dadurch gekennzeichnet, dass** eine Drehbewegung der Gurtspule (12) mittels einer Reibkupplung (20) mit einer Drehbewegung des Schlepphebels (22) gekoppelt ist, wobei die Reibkupplung (20) eine Feder (50) enthält, die mindestens das Reibungselement (48) so vorspannt, dass ein vorgegebenes Reibmoment zwischen einem Eingang und einem Ausgang der Reibkupplung (20) erzeugt wird, wobei die Feder (50) vorzugsweise eine Spiralfeder aus Metall ist.

8. Gurtaufroller (10) nach Anspruch 7, **dadurch gekennzeichnet, dass** das Reibungselement (48) einstückig mit dem Schlepphebel (22) ausgeführt ist.

9. Gurtaufroller (10) nach Anspruch 7 oder 8, **dadurch gekennzeichnet, dass** die Feder (50) zwischen zwei Reibungselementen (48) angeordnet ist und die Reibungselemente (48) in entgegengesetzte Richtungen vorspannt.

10. Gurtaufroller (10) nach einem der Ansprüche 7 bis 9, **dadurch gekennzeichnet, dass** das Reibungselement (48) mit einer am Zahnrad (18) angeordneten Reibfläche (46) zusammenwirkt.

11. Gurtaufroller (10) nach Anspruch 10, **dadurch gekennzeichnet, dass** das Zahnrad (18) ringförmig ist und die Reibfläche (46) an dessen Innenumfang (45) angeordnet ist.

12. Gurtaufroller (10) nach Anspruch 11, **dadurch gekennzeichnet, dass** die Reibfläche (46) ringförmig ist.

13. Gurtaufroller (10) nach einem der Ansprüche 10 bis 12, **dadurch gekennzeichnet, dass** die Reibfläche (46) durch mindestens eine Wand einer umlaufenden Nut (47) gebildet ist und die Nut (47) vorzugsweise einen V-förmigen Querschnitt hat.

14. Gurtaufroller (10) nach Anspruch 13, **dadurch gekennzeichnet, dass** das mindestens eine Reibungselement (48) zumindest teilweise in der Nut (47) aufgenommen ist und die in der Nut (47) aufgenommenen Abschnitte des Reibungselements (48) zum Querschnitt der Nut (47) korrespondierend gestaltet sind.

15. Gurtaufroller (10) nach einem der Ansprüche 7 bis 14, **dadurch gekennzeichnet, dass** das Reibungselement (48) als elastischer, kreisbogenförmiger Reibarm ausgebildet ist.

## Claims

1. A belt retractor (10) for a vehicle safety belt comprising a belt reel (12) supported for rotation in a frame (14), a sensor (16) for vehicle-sensitive blocking of the belt reel (12) and a mechanism (17) for disabling the sensor (16), **characterized in that** via a gear (18) supported for rotation on the frame (14), a friction element (20, 46, 48) and a cam follower (22) the belt reel (12) acts on the mechanism (17) for disabling the sensor (16) and can adjust the same.

2. The belt retractor (10) according to claim 1, **characterized in that** the gear (18) interacts with a pinion supported non-rotationally on the belt reel (12) via external teeth.

3. The belt retractor (10) according to claim 1 or 2, **characterized in that** the mechanism (17) for disabling the sensor (16) comprises a blocking lever (24) supported for rotation which is adjustable between a disabling position in which it acts on a holding surface (32) of the sensor (16) and a release position in which it is spaced apart from the holding surface (32).

4. The belt retractor (10) according to claim 3, **characterized in that** the cam follower (22) includes a first and second stop face (42, 44) interacting with the blocking lever (24) to adjust the latter between the disabling position and the release position, wherein the stop faces (42, 44) are preferably arranged to be adjacent to each other.

5. The belt retractor (10) according to claim 3 or 4, **characterized in that** the cam follower (22) includes two stop faces (38, 40) offset in the circumferential direction for limiting a rotary movement of the cam follower (22) relative to the blocking lever (24).

6. The belt retractor (10) according to any one of the claims 3 to 5, **characterized in that** the blocking lever (24) is biased in a direction for disabling the sensor (16) preferably by a spring (26).

7. The belt retractor (10) according to any one of the preceding claims, **characterized in that** a rotary motion of the belt reel (12) is coupled to a rotary motion of the cam follower (22) by means of a friction coupling (20), wherein the friction coupling (20) includes a spring (50) which biases at least the friction element (48) so that a predetermined friction moment is generated between an input and an output of the friction coupling (20), wherein the spring (50) preferably is a coil spring made from metal.

8. The belt retractor (10) according to claim 7, **characterized in that** the friction element (48) is formed integrally with the cam follower (22).

9. The belt retractor (10) according to claim 7 or 8, **characterized in that** the spring (50) is arranged between two friction elements (48) and biases the friction elements (48) in opposite directions.

10. The belt retractor (10) according to any one of the claims 7 to 9, **characterized in that** the friction element (48) interacts with a friction surface (46) arranged on the gear (18).

11. The belt retractor (10) according to claim 10, **characterized in that** the gear (18) is ring-shaped and the friction surface (46) is arranged on the inner circumference (45) thereof.

12. The belt retractor (10) according to claim 11, **characterized in that** the friction surface (46) is ring-shaped.

13. The belt retractor (10) according to any one of the claims 10 to 12, **characterized in that** the friction surface (46) is formed by at least one wall of a peripheral groove (47) and that the groove (47) preferably has a V-shaped cross-section.

14. The belt retractor (10) according to claim 13, **characterized in that** the at least one friction element (48) is at least partially received in the groove (47) and that the portions of the friction element (48) received in the groove (47) are designed to be corresponding to the cross-section of the groove (47).

15. The belt retractor (10) according to any one of the claims 7 to 14, **characterized in that** the friction element (48) is in the form of an elastic circular arc-shaped friction arm.

## Revendications

1. Enrouleur de ceinture (10) pour une ceinture de sécurité de véhicule, avec une bobine de ceinture (12) montée libre en rotation dans un châssis (14), un capteur (16) sensible au véhicule pour le blocage de la bobine de ceinture (12) et un mécanisme (17) pour désactiver le capteur (16), **caractérisé en ce que** la bobine de ceinture (12) via une roue dentée (18) montée libre en rotation dans le châssis (14), un élément de friction (20, 46, 48) et un culbuteur (22) agit sur le mécanisme (17) pour désactivation du capteur (16) et peut le régler.

2. Enrouleur de ceinture (10) selon la revendication 1, **caractérisé en ce que** la roue dentée (18) interagit par une denture externe avec un pignon monté de manière fixe en rotation sur la bobine de ceinture (12).

3. Enrouleur de ceinture (10) selon la revendication 1 ou 2, **caractérisé en ce que** le mécanisme (17) de désactivation du capteur (16) comprend un levier de blocage (24) monté libre en rotation, lequel est réglable entre une position de désactivation dans laquelle il prend prise sur une surface de maintien (32) du capteur (16), et une position de libération dans laquelle il est espacé de la surface de maintien (32).

4. Enrouleur de ceinture (10) selon la revendication 3, **caractérisé en ce que** le culbuteur (22) présente une première et une deuxième surface de contact (42, 44), lesquelles coopèrent avec le levier de blocage (24) pour le régler entre la position de désactivation et la position de libération, pour lequel les surfaces de contact (42, 44) sont de préférence disposées adjacentes.

5. Enrouleur de ceinture (10) selon la revendication 3 ou 4, **caractérisé en ce que** le culbuteur (22) comprend deux surfaces de butée décalées circonférentiellement (38, 40) pour limiter un mouvement de rotation du culbuteur (22) par rapport au levier de blocage (24).

6. Enrouleur de ceinture (10) selon l'une des revendications 3 à 5, **caractérisé en ce que** le levier de blocage (24) est sollicité dans un sens pour désactiver le capteur (16), de préférence par un ressort (26).

7. Enrouleur de ceinture (10) selon l'une quelconque des revendications précédentes, **caractérisé en ce qu'**un mouvement de rotation de la bobine de ceinture (12) est couplée à un mouvement de rotation du culbuteur (22) au moyen d'un embrayage à friction (20), pour lequel l'embrayage à friction (20) comporte un ressort (50)) qui sollicite au moins l'élément de friction (48), de telle sorte qu'un couple de frottement prédéterminé est généré entre une entrée et une sortie de l'embrayage à friction (20), le ressort (50) est de préférence un ressort hélicoïdal en métal.

8. Enrouleur de ceinture (10) selon la revendication 7, **caractérisé en ce que** l'élément de friction (48) est réalisé d'une seule pièce avec le culbuteur (22).

9. Enrouleur de ceinture (10) selon la revendication 7 ou 8, **caractérisé en ce que** le ressort (50) est disposé entre deux éléments de friction (48) et sollicite les éléments de friction (48) dans des sens opposés.

10. Enrouleur de ceinture (10) selon l'une des revendications 7 à 9, **caractérisé en ce que** l'élément de friction (48) coopère avec une surface de friction (46) disposée sur la roue dentée (18).

11. Enrouleur de ceinture (10) selon la revendication 10, **caractérisé en ce que** la roue dentée (18) est annulaire et la surface de friction (46) est disposée sur sa circonférence intérieure (45).

12. Enrouleur de ceinture (10) selon la revendication 11, **caractérisé en ce que** la surface de friction (46) est annulaire.

13. Enrouleur de ceinture (10) selon l'une des revendications 10 à 12, **caractérisé en ce que** la surface de friction (46) est formée par au moins une paroi d'une gorge circonférentielle (47) et la rainure (47) a de préférence une section transversale en forme de V.

14. Enrouleur de ceinture (10) selon la revendication 13, **caractérisé en ce que** le au moins un élément de friction (48) est au moins partiellement reçu dans la rainure (47) et les parties de l'élément de friction (48) prises dans la rainure (47) sont conçues pour correspondre à la section transversale de la rainure (47).

15. Enrouleur de ceinture (10) selon l'une des revendications 7 à 14, **caractérisé en ce que** l'élément de friction (48) est réalisé sous la forme d'un bras de friction élastique en forme d'arc de cercle.
